**Europäisches Patentamt**

**European Patent Office**

**Office européen des brevets**

(19)

(11) **EP 1 376 724 A1**

(12) **EUROPÄISCHE PATENTANMELDUNG**

(43) Veröffentlichungstag:
**02.01.2004 Patentblatt 2004/01**

(51) Int Cl.⁷: **H01M 8/04**, H01M 16/00,
B60L 11/18, B60K 1/04

(21) Anmeldenummer: **02013266.8**

(22) Anmeldetag: **17.06.2002**

(84) Benannte Vertragsstaaten:
**AT BE CH CY DE DK ES FI FR GB GR IE IT LI LU
MC NL PT SE TR**
Benannte Erstreckungsstaaten:
**AL LT LV MK RO SI**

(71) Anmelder: **SFC Smart Fuel Cell AG
85649 Brunnthal-Nord (DE)**

(72) Erfinder:
  • **M-ller, Jens, Dr.
    81827 M-nchen (DE)**
  • **Rotkopf, Kurt
    81539 M-nchen (DE)**

  • **Sonntag, Christoph
    85591 Vaterstetten (DE)**
  • **Böhm, Christian
    85635 Siegersbrunn (DE)**
  • **Rabenseifner, Peter
    82140 Olching (DE)**

(74) Vertreter: **Grünecker, Kinkeldey,
    Stockmair & Schwanhäusser Anwaltssozietät
    Maximilianstrasse 58
    80538 München (DE)**

Bemerkungen:
    Geänderte Patentansprüche gemäss Regel 86 (2)
    EPÜ.

(54) **Hybridenergiequelle**

(57)    Die Erfindung betrifft eine Hybridenergiequelle (Strom-/Spannungsquelle), in der eine Brennstoffzelleneinrichtung und eine Energiespeichereinrichtung, beispielsweise eine Batterie und/oder ein Kondensator, parallel direkt miteinander verschaltet sind.

FIG. 3

EP 1 376 724 A1

## Beschreibung

Gebiet der Erfindung

Die Erfindung betrifft eine Hybridenergiequelle (Strom-/Spannungsquelle), in der eine Brennstoffzelleneinrichtung und eine Energiespeichereinrichtung, beispielsweise eine Batterie und/oder ein Kondensator, parallel miteinander verschaltet sind.

Stand der Technik

Beschränkte sich die Energieversorgung mittels Brennstoffzellen früher weitgehend auf exotische Anwendungsbereiche wie die Raumfahrt, so finden Brennstoffzellen aufgrund der rasanten technischen Entwicklung der letzten Jahre in neuerer Zeit immer weitere Verbreitung, insbesondere als Alternative zu Batterien bei der netzunabhängigen Stromversorgung.

Bei der Verwendung von Brennstoffzellen als alternative Energiequelle zu Batterien sind einige prinzipielle Unterschiede zu berücksichtigen (Der Begriff "Batterien" umfasst Primärelemente und Sekundärelemente, d.h. wiederaufladbare Akkus; bei den meisten später diskutierten anwendungsorientierten Beispielen liegt der Schwerpunkt auf letzteren):

Die Leistungsfähigkeit von Brennstoffzellen hängen im Allgemeinen deutlich von der Temperatur ab. DMFC-Systeme haben ihren optimalen Betriebspunkt bei etwa 60 bis 120°C, je nach Systemauslegung. Damit sind sie für sich allein, also beispielsweise ohne unterstützende Batterie, nur begrenzt kaltstartfähig. Weiterhin sind Brennstoffzellen vielfach zu träge, um plötzliche starke Laständerungen zu meistern, wie sie beispielsweise durch Einschaltvorgänge verursacht werden können. Darüber hinaus sind die Klemmenspannungen von Brennstoffzellen stark lastabhängig, während die meisten Anwendungen eine konstante Versorgungsspannung erfordern.

Batterien speichern chemische Energie und sind dadurch erschöpfbar, während Brennstoffzellen keine Energie speichern, sondern die zugeführten Stoffen enthaltene chemische Energie lediglich umwandeln. Bei gleicher Dimensionierung eines Brennstoffzellensystems (inklusive Brennstoffvorrat) und einer Batterie steht dafür die i.d.R. deutlich längere Betriebsdauer auf der Vorteilseite der Brennstoffzellen. Durch mit wenigen Handgriffen auswechselbare Brennstoffpatronen bzw. durch kontinuierliche Zufuhr aus einem externen Brennstofftank bieten sich ferner die Möglichkeiten eines netzunabhängigen (quasi-)Endlosbetriebs, der mit Batterien nicht möglich ist. Neben dem nahezu instantanen Responseverhalten ist ein wesentlicher Vorteil von Batterien, dass ihre Klemmenspannung weit weniger lastabhängig als die von vergleichbaren Brennstoffzellen ist und Batterien somit größere abrupte Laständerungen deutlich schneller und besser bewältigen können als Brennstoffzellen.

Um die oben beschriebenen, teilweise komplementären Vorteile von Brennstoffzellen und Batterien gleichzeitig nutzen zu können, wurden in der Technik Kombinationen von Brennstoffzellen und Batterien entwickelt, die als Hybridenergiequellen oder Hybridsysteme bezeichnet werden. Solche Systeme werden an das jeweilige Einsatzgebiet angepasst. Lässt sich beispielsweise der Energiebedarf in einen Normallastanteil und einen Spitzenanteil aufteilen, so kann das Hybridsystem zur Deckung dieses Energiebedarfs so ausgelegt werden, dass die Brennstoffzelle im Normallastbetrieb den Stromverbrauch von angeschlossenen Verbrauchern alleine deckt, während bei Lastspitzen die Batterie unterstützend hinzukommt oder sogar dominiert. Abhängig vom Ladezustand der Batterie kann diese im Norrnallastbetrieb (und niedrigerem Energiebedarf) entweder zur Deckung des Stromverbrauchs beitragen oder aber durch die Brennstoffzelle beladen werden.

Da aber die Klemmenspannungen von Brennstoffzellen und Batterien unterschiedlich stark lastabhängig sind und sich dadurch i.A. unterscheiden werden, wird zu Ankopplung der Batterie an die Brennstoffzelle ein Spannungswandler (DC/DC Wandler) vorgesehen, um ein Angleichen der unterschiedlichen Spannungsniveaus zu bewirken.

Diese indirekte Ankopplung birgt diverse Nachteile, so die zusätzlichen Anschaffungskosten für den Spannungswandler, aber auch mit dem Betrieb des Spannungswandlers verbundene Verluste, die sich negativ auf den Gesamtwirkungsgrad des Systems auswirken. Zur Kompensation der Verluste muss die Brennstoffzelleneinrichtung überdimensioniert werden, was weitere Kosten und einen erhöhten Platzbedarf verursacht.

Beschreibung der Erfindung

Es ist eine Aufgabe der Erfindung, Hybridenergiequellen aus einer Brennstoffzelleneinrichtung und einer Energiespeichereinrichtung bereitzustellen, die die bei herkömmlichen Hybridanordnungen auftretenden Nachteile vermeiden, und insbesondere einen besseren Gesamtwirkungsgrad aufweisen.

Diese Aufgabe wird durch die erfindungsgemäße Hybridenergiequelle gemäß Anspruch 1 gelöst. Vorteilhafte Weiterbildungen und Detaillösungen sind in den Unteransprüchen angegeben.

Die erfindungsgemäße Hybridanordnung umfasst eine Brennstoffzelleneinrichtung und eine Energiespeichereinrichtung, die direkt miteinander parallel verschaltet sind.

Im Unterschied zu der aus der Technik bekannten indirekten Ankopplung von Brennstoffzellen an wiederaufladbare Batterien, die über einen verlustbehafteten Spannungswandler erfolgt, sind die Spannungsabgriffe der Brennstoffzellen- und Energiespeichereinrichtung bei der vorliegenden Erfindung über eine Parallelschaltung direkt, d.h. ohne einen Spannungswandler, miteinander verbunden. Wegen dieser Parallelschaltung befinden sich die Spannungsabgriffe der Brennstoffzellen- und Energiespeichereinrichtung im stationären Zustand (zeitlich konstante Ströme) auf demselben Potential, das dem Klemmenpotential der Hybridenergiequelle entspricht.

Wenn die im stromlosen Zustand vorliegende Ausgangsspannung (Quellenspannung oder Urspannung) der Brennstoffzelleneinrichtung größer ist als die der Energiespeichereinrichtung, so erfolgt im Leerlaufbetrieb (d.h. ohne äußeren Verbraucher) der Hybridanordnung ein Stromfluss innerhalb des Parallelkreises, über den die Energiespeichereinrichtung so lange aufgeladen wird, wie diese Differenz der Quellenspannungen besteht. Bei angeschlossenem Verbraucher hängt es von der aktuellen Last und dem aktuellen Ladezustand der Energiespeichereinrichtung ab, ob diese zum Strombedarf des Verbrauchers beiträgt und dabei entladen wird, oder ob der Strombedarf des Verbrauchers durch die Brennstoffzelleneinrichtung alleine gedeckt wird und gegebenenfalls die Energiespeichereinrichtung gleichzeitig beladen wird.

Die erfindungsgemäße Ankopplung ohne verlustbehafteten Spannungswandler zwischen Brennstoffzellen- und Energiespeichereinrichtung erhöht den Wirkungsgrad und ermöglicht eine Reduzierung der Anschaffungskosten und des Platzbedarfs.

In einer bevorzugten Weiterbildung umfasst die Energiespeichereinrichtung einen Kondensator. Dieser wird durch die Brennstoffzelleneinrichtung aufgeladen, bis er auf dem Klemmenpotential ist. Bei zeitlich konstantem Laststrom verbleibt der Kondenstor im aufgeladenen Zustand, ist also passiv. Der Laststrom wird alleine durch die Brennstoffzelleneinrichtung (und, falls vorhanden, weitere Energiespeichereinrichtungen) aufgebracht. Nimmt aber der Laststrombedarf zu, so dass es zu einem Absenken der Klemmenspannung kommt, so trägt der Kondensator solange zum Laststrom bei, bis er sich auf dem abgesenkten Klemmenpotential befindet. Umgekehrt kommt es bei einer Abnahme des Laststroms wegen der Erhöhung des Klemmenpotentials der Brennstoffzelleneinrichtung zu einer weiteren Aufladung des Kondensators. Der Vorteil dieser Anordnung besteht darin, dass Lastzunahmen und insbesondere abrupte Lastspitzen, für deren Stromaufkommen die Brennstoffzelleneinrichtung zu träge ist (und unter Umständen auch eine zusätzlich vorgesehene Batterie zu träge wäre), mit einem geeignet gewählten Kondensator aufgefangen werden können.

In einer besonders bevorzugten alternativen oder zusätzlichen Weiterbildung der Hybridenergiequelle umfasst die Energiespeichereinrichtung eine Batterie, die gleichpolig mit der Brennstoffzelleneinrichtung verbunden ist.

Im Unterschied zum eingangs beschriebenen Stand der Technik, gemäß dem die Batterie einer Brennstoffzellen/Batterie-Hybridanordnung über einen zwischengeschalteten Spannungswandler durch die Brennstoffzelleneinrichtung aufgeladen wird und die Klemmenspannungen der Batterie und der Brennstoffzelleneinrichtung auch im stationären Zustand (d.h. bei verschwindendem oder konstantem Laststrom) im Allgemeinen verschieden sind, ist bei der vorliegenden Erfindung kein Spannungswandler vorgesehen: Die Klemmenspannung der Hybridenergiequelle hängt dadurch entscheidend von den Innenwiderständen der Batterie und der Brennstoffzelleneinrichtung und deren Quellenspannungen ab und liegt zwischen diesen beiden Quellenspannungen. Die Quellenspannungsdifferenz zwischen Batterie und der Brennstoffzelleneinrichtung ist die unmittelbar treibende Kraft für das Beladen der Batterie.

In einer unter gewissen Bedingungen vorteilhaften Weiterbildung der vorgenannten Hybridenergiequelle weist wenigstens eine der gleichpoligen Verbindungen zwischen der Brennstoffzelleneinrichtung und der Batterie zwei Zweige, wobei der erste Zweig für die Aufladung der Batterie durch die Brennstoffzelleneinrichtung vorgesehen ist und eine Ladebegrenzungseinrichtung zur Begrenzung der Aufladung aufweist, und der zweite Zweig mit einer Ausgangsklemme verbunden ist und eine Einrichtung aufweist, um die Aufladung der Batterie über den zweiten Zweig zu verhindern.

Diese Weiterbildung ist vor allem dann vorteilhaft, wenn die Quellenspannung der Brennstoffzelleneinrichtung deutlich höher als die maximale Quellenspannung der Batterie ist: in diesem Fall könnte ohne Ladebegrenzungseinrichtung ein Überladen der schon vollgeladenen Batterie erfolgen.

Bei länger anhaltendem Beanspruchen der Batterie könnte diese so stark entladen werden, dass sie in einen Ladezustand mit sehr niedriger Quellenspannung gelangt. Nimmt in dieser Situation der Laststrom deutlich ab, so besteht die Gefahr, dass wegen der dann entsprechend großen Differenz der Quellenspannungen zwischen Brennstoffzelle und Batterie ein sehr hoher, mitunter zerstörerischer Ladestrom fließen würde. Auch dies kann gemäß der oben beschriebenen Weiterbildung vermieden werden.

In einer weiteren bevorzugten Weiterbildung umfasst die Hybridenergiequelle eine Einrichtung, um einen Elektrolysestrom durch die Brennstoffzelleneinrichtung zu verhindern.

Diese Einrichtung kann beispielsweise eine Diode sein, die dann sperrt, wenn die Quellenspannung der Brennstoffzelleneinrichtung unter diejenige der Batterie sinkt. Dies kann beispielsweise bei gestörten Betriebsbedingungen der Brennstoffzelleneinrichtung der Fall sein, wie etwa Brennstoff- und/oder Sauerstoffmangel, aber auch dann, wenn der durch einen Verbraucher "gezogene" Laststrom so groß ist, dass deren Spannung ganz oder teilweise zusammenbricht.

Ein wesentlicher Gesichtspunkt bei der Ausbildung der Hybridenergiequelle mit einer Brennstoffzelleneinrichtung und einer Batterie ist die Wahl der jeweiligen Quellenspannungen. Sieht man von betriebsbedingten Schwankungen ab, so kann die Quellenspannung der Brennstoffzelleneinrichtung als Konstante angesehen werden. Die Quellenspannung der Batterie hängt dagegen von deren Ladezustand ab. Die maximale Quellenspannung wird bei voller Beladung erreicht. Eine sinnvolle Verwendung einer Batterie ist in der Regel nur dann möglich, wenn der maximale Ladezustand wenigstens annäherungsweise erreicht wird. Daher sollten die Quellenspannung der Batterie im vollgeladenen Zustand nicht zu sehr von der Quellenspannung der Brennstoffzelleneinrichtung abweichen. Ist die deutlich größer, so kann sie nur unzureichend aufgeladen werden. Ist sie deutlich kleiner, so müssen Maßnahmen getroffen werden, um ein Überladen der Batterie zu verhindern.

Um diese Probleme zu vermeiden, wird die Hybridenergiequelle bevorzugt so ausgebildet, dass die Quellenspannung der Batterie im vollgeladenen Zustand um weniger als 10% von der Quellenspannung der Brennstoffzelleneinrichtung abweicht.

Eine Batterie mit deutlich kleineren Innenwiderstand als eine Brennstoffzelleneinrichtung prägt der Brennstoffzelleneinrichtung und der gesamten Hybridenergiequelle ihre Spannung auf. Dies bedeutet aber, dass die Klemmenspannung der Hybridenergiequelle sehr stark vom Ladezustand der Batterie abhängt. Viele Verbraucher erfordern aber eine konstante Versorgungsspannung.

Um anstelle einer veränderlichen Klemmenspannung $U_K$ eine konstante Ausgangsspannung $U_A$ bereitzustellen, die insbesondere unabhängig vom Ladezustand der Batterie ist, wird eine vorteilhafte Weiterbildung bereitgestellt, bei welcher die Hybridenergiequelle einen Spannungsregler umfasst, der die Klemmenspannung $U_K$ der Hybridenergiequelle in die erwünschte Ausgangsspannung $U_A$ umwandelt.

Solch ein Spannungsregler kann ein Linearregler, ein Spannungswandler oder eine Zenerdiode sein oder diese Elemente umfassen. Da eine Vermeidung jeglicher dissipativer Prozesse im Hinblick auf einen möglichst hohen Wirkungsgrad der Hybridenergiequelle wünschenswert ist, umfasst der Spannungsregler in einer besonders bevorzugten Weiterbildung einen PWM-Spannungssteller, dessen Verluste sich im wesentlichen allein auf Schaltvorgänge beschränken.

Zur Steuerung des PWM-Spannungsstellers werden die Klemmenspannung und/oder der Ladezustand permanent oder in kurzen Anständen gemessen (z.B. über Shunts), und bei Änderungen die entsprechenden Einstellgrößen des PWM-Spannungsstellers angepasst. Diese Anpassung des PWM-Spannungsstellers an geänderte Klemmenspannungen kann wegen der zu vernachlässigenden elektronischen Schaltzeiten nahezu instantan erfolgen.

Die Erfindung soll nachfolgend unter Bezugnahme auf die beigefügte Figur, die sowohl die Grundprinzipien der Erfindung veranschaulicht, als auch bevorzugte Ausführungsformen darstellt, erläutert werden.

Es zeigen:

Fig. 1: den schematischen Verlauf der Abhängigkeit der Klemmenspannung einer Brennstoffzelle vom Laststrom;

Fig. 2: ein schematisches Schaltbild der Hybridenergiequelle mit Definitionen von in der Beschreibung verwendeten Begriffen;

Fig. 3: das Prinzip der erfindungsgemäßen Hybridenergiequelle mit einer Brennstoffzelleneinrichtung und einer Energiespeichereinrichtung;

Fig. 4: eine erste bevorzugte Ausführungsform der in Fig. 3 gezeigten Hybridenergiequelle, bei der die Energiespeichereinrichtung eine Batterie ist;

Fig. 5: eine zweite bevorzugte Ausführungsform der in Fig. 3 gezeigten Hybridenergiequelle, bei der die Energiespeichereinrichtung ein Kondensator ist;

Fig. 6: eine dritte bevorzugte Ausführungsform der in Fig. 3 gezeigten Hybridenergiequelle, bei der die Energiespeichereinrichtung durch eine Parallelschaltung einer Batterie und eines Kondensators gebildet wird;

Fig. 7: die Änderung der Teilströme als Funktion des Laststromes in Abhängigkeit vom Ladezustand der Batterie für die Ausführungsform von Fig. 4;

Fig. 8: die Auswirkung von Lastspitzen auf die Klemmenspannungen einer Brennstoffzelle (punktiert) und einer Hybridenergiequelle (durchgezogene Linie) gemäß den Ausführungsformen von Fig. 5 und 6;

Fig. 9: eine Weiterbildung der in Fig. 3 skizzierten erfindungsgemäßen Hybridenergiequelle;

Fig. 10: eine Weiterbildung der Hybridenergiequelle von Fig. 2 zur Bereitstellung einer von der Klemmenspannung abweichenden Ausgangsspannung;

Fig. 11: eine bevorzugtes Verfahren zur Bereitstellung einer beliebigen Ausgangsspannung.

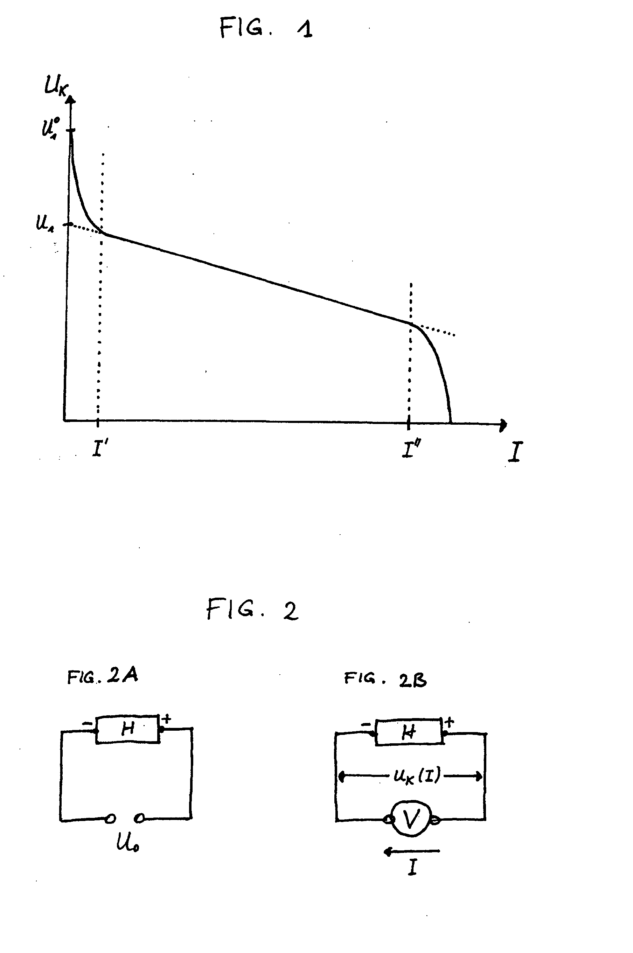

Figur 1 soll die $U_k(I)$ Kennlinie einer Brennstoffzelle beispielhaft veranschaulichen. Das $U_k(I)$-Diagramm lässt sich in drei Bereiche einteilen: $I < I'$, $I' \leq I \leq I''$, und $I > I''$.

Bei niedrigen Strömen ($I < I'$) dominiert die in katalytischen Verlusten begründete Durchtrittsüberspannung. Bei hohen Strömen ($I > I''$) dominiert die Diffusionsüberspannung. Beide Effekte sind ausgesprochen nicht-linear und führen zu einer überproportionalen Abnahme der Klemmenspannung $U_K$ mit zunehmendem Laststrom.

Zwischen diesen beiden Extremen liegt im $U_k$($I$)-Diagramm ein durch den Innenwiderstand $R_1$ dominierter Bereich $I' \leq I \leq I''$ mit im wesentlichen linearer Abhängigkeit, der in der Regel den für Anwendungen der Brennstoffzelle in Frage kommenden Bereich des $U_k(I)$-Diagramms darstellt. Für diesen Bereich gilt in guter Näherung:

$$U_K(I) = U_1 - R_1 I,$$

wobei zu beachten ist, dass die durch diese Gleichung definierte Spannung $U_1$ aufgrund des Durchtritts bei kleinen Strömen niedriger als die eigentliche Quellenspannung (Leerlaufspannung) der Brennstoffzelle ist. In Anlehnung an das Verhalten von Batterien, deren $U_k(I)$-Verhalten durch eine analoge Gleichung beschrieben wird, wird dessen ungeachtet $U_1$ nachfolgend vereinfachend als (reduzierte) Quellenspannung bezeichnet. Die Leerlaufspannung, also die eigentliche Quellenspannung, wird mit einem Index "o" (als Subskript oder, bei mehreren Indizes, als Superskript) gekennzeichnet: $U^o_1$.

Die Figuren 2A und 2B dienen zur Definition der in der vorliegenden Anmeldung verwendeten Begriffe, sowie zur Veranschaulichung des der Erfindung zugrunde liegenden Grundprinzips:

In Fig. 2A bezeichnet das Bezugszeichen H eine Hybridenergiequelle mit Anschlussklemmen, an denen im Leerlaufbetrieb, also ohne externen Verbrauer, an den Spannungsabgriffen die Klemmenspannung $U_k$(0) $\equiv U_o$ (Leerlaufspannung) abfällt.

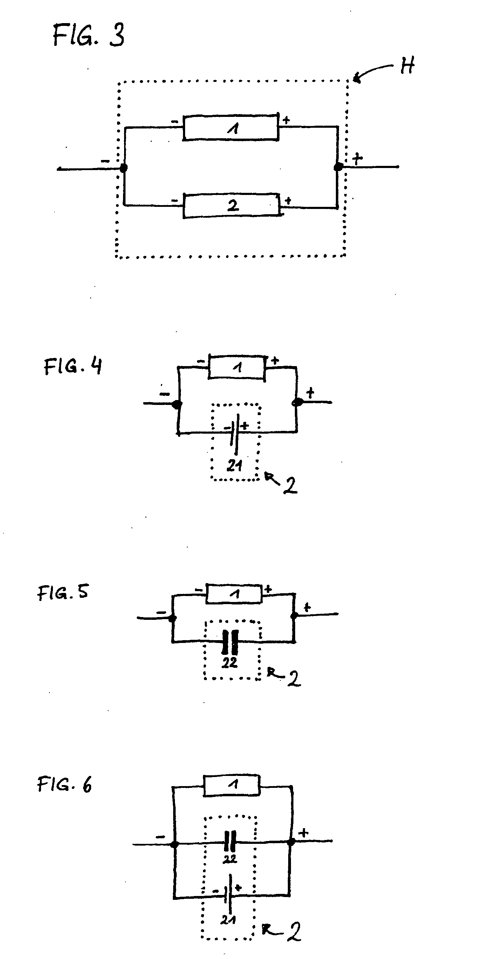

Die Hybridenergiequelle H wird erfindungsgemäß durch eine Parallelschaltung einer Brennstoffzelleneinrichtung 1 und einer Energiespeichereinrichtung 2 gebildet. Sie ist in Fig. 3 skizziert. Obwohl die Brennstoffzelleneinrichtung 1 und die Energiespeichereinrichtung 2 unterschiedliche Quellenspannungen $U_1$ und $U_2$ haben können, werden sie ohne Spannungsanpassung direkt (d.h. ohne Spannungswandler) miteinander verschaltet. Die Klemmenspannung $U_K$(O) liegt i.A. zwischen $U_1$ und $U_2$, hängt im Detail aber von den elektrischen Parametern der Brennstoffzelleneinrichtung 1 und der Energiespeichereinrichtung 2 ab.

Wie unten anhand von bevorzugten Ausführungsformen beispielhaft beschrieben wird, kann die Energiespeichereinrichtung 2 eine Batterie (Akku) oder ein Kondensator sein, aber auch eine Anordnung mehrerer Batterien oder Kondensatoren, sowie eine Kombination von Batterie(n) und Kondensator(en).

Fig. 2B zeigt die Hybridenergiequelle H beim Betreiben eines Verbrauchers V, der einen Laststrom I zieht und dadurch die Klemmenspannung auf einen Wert $U_K(I) < U_o$ vermindert. Wird anstelle der Hybridquelle nur eine Brennstoffzelle als Energiequelle (Strom-/Spannungsquelle) verwendet, so kann dieses Herabsenken der Klemmenspannung im Lastbetrieb wegen der starken Lastabhängigkeit von Brennstoffzellen zu nicht tolerierbaren Spannungsverlusten führen. Dieses für viele Anwendungen nachteilige Verhalten von Brennstoffzellen soll durch die Erfindung auf einfache und elegante Weise abgeschwächt bzw. vermieden werden.

Fig. 4 zeigt die Ausbildung der Hybridenergiequelle durch eine Kombination einer Brennstoffzelleneinrichtung 1 und einer Batterie 21.

Zunächst soll der Leerlaufbetrieb betrachtet werden: ohne externen Stromfluss (ausgeschalteter Verbraucher), fällt an den Spannungsabgriffen der Hybridenergiequelle H die Leerlaufspannung $U_K(0)$ ab, die durch die Quellenspannungen $U_1$, $U_2$ und die Innenwiderstände $R_1$, $R_2$ der beiden Energiequellen bestimmt wird:

$$U_k(0) = (U_1 R_2 + U_2 R_1)/(R_1 + R_2)$$

Für den Regelfall, in dem der Innenwiderstand $R_1$ der Brennstoffzelle 1 deutlich höher als der Innenwiderstand $R_2$ der Batterie 21 ist, $R_1 >> R_2$, vereinfacht sich dies zu:

$$U_k(0) \approx U_2$$

Die Leerlaufspannung $U_K(0)$ wird also im Wesentlichen durch die Quellenspannung $U_2$ der Batterie 21 festgelegt und hängt damit vom aktuellen Ladezustand der Batterie 21 ab. Da die Batterie durch die Brennstoffzelle beladen wird, ist gleichzeitig die maximale Quellenspannung der Batterie durch die Quellenspannung der Brennstoffzelle beschränkt.

Es lässt sich leicht zeigen, dass bei $R_1 >> R_2$ auch bei nicht-verschwindenden Lastströmen die Klemmenspannung $U_K(I)$ ($\approx U_2 - R_2 I_2 \approx U_{K2}(I)$) der Hybridenergiequelle H durch die Batterie 21 festgelegt wird.

Bei dieser Hybridenergiequelle H wird also der Brennstoffzelle 1 die Klemmenspannung der Batterie 21 aufgeprägt, d.h. die Brennstoffzelle 1 wird "spannungsgeführt" betrieben.

Im Leerlaufbetrieb, d.h. wenn kein Laststrom fließt (I=0), fließt bei ungleichen Quellenspannungen, $U_1 \neq U_2$, ein Strom innerhalb der Hybridquelle, der zum Beladen der Batterie genutzt werden kann. Dabei gilt:

$$0 = I_1 + I_2$$

oder

$$I_1 = -I_2$$

Es wird dabei die in der E-Technik verwendete technische Stromrichtung für die Vorzeichenregelung übernommen, d.h. ein durch die entsprechende Energiequelle (Stromquelle) bereitgestellter Strom hat positives Vorzeichen, während ein in die Energiequelle eingespeister Strom negatives Vorzeichen besitzt.

Da bei einer Brennstoffzelle - ähnlich wie bei einem Primärelement - ein Elektrolysestrom (Strom entgegen der natürlichen Stromrichtung) zu deren Zerstörung führen kann, sollte immer $I_1 \geq 0$ gelten, was bei der Verwendung von Batterien und Brennstoffzellen mit der in Fig. 3 skizzierten Anordnung ohne Einsatz weiterer elektronischer Bauteile nur durch

$$U_1 \geq U_2$$

realisierbar ist.

Alternativ dazu oder vorsorgehalber zusätzlich kann eine Diode in Reihe mit der Brennstoffzelle und der Energiespeichereinrichtung so vorgesehen werden, so dass ausschließlich $I_1 \geq 0$ zugelassen ist. Bei $U_1 < U_2$ ist dies sogar notwendig.

Die Bedingung $U_1 \geq U_2$ ist gleichzeitig dafür Voraussetzung dafür, dass die Brennstoffzelle im Leerlauf (oder Teillastbetrieb) zum Aufladen der Batterie verwendet werden kann.

Wird die Hybridenergiequelle zum Betreiben eines externen Verbrauchers verwendet, der aus der Hybridquelle den Laststrom I zieht, so setzt sich dieser Laststrom I aus der Summe der Teilströme $I_1$ und $I_2$ der beiden Energiequellen 1 und 21 zusammen:

$$I = I_1 + I_2$$

Die Quellenspannung $U_2$ und der Innenwiderstand $R_2$ der Batterie hängen von ihrem Ladezustand ab: mit dem Entladen sinkt die Quellenspannung $U_2$, während der Innenwiderstand ansteigt. Die Stromabhängigkeit des Innenwiderstandes $R_2$ kann dagegen über einen weiten Bereich in guter Näherung als vernachlässigbar angenommen werden, so dass für die $U_k$(I)-Kennlinien ein lineares Verhalten angenommen werden kann:

$$U_K(I) = U_2 - R_2 I$$

Wie schon unter Bezugnahme auf Figur 1 angedeutet, ist die $U_K(I)$ Kennlinie einer Brennstoffzelle deutlich komplexer und stärker lastabhängig als die einer Batterie. Es gibt aber auch hier einen Bereich, der durch eine äquivalente Gleichung,

$$U_K(I) = U_1 - R_1 I,$$

beschrieben werden kann. Zur nachfolgenden Analyse wird allein dieser Bereich herangezogen.

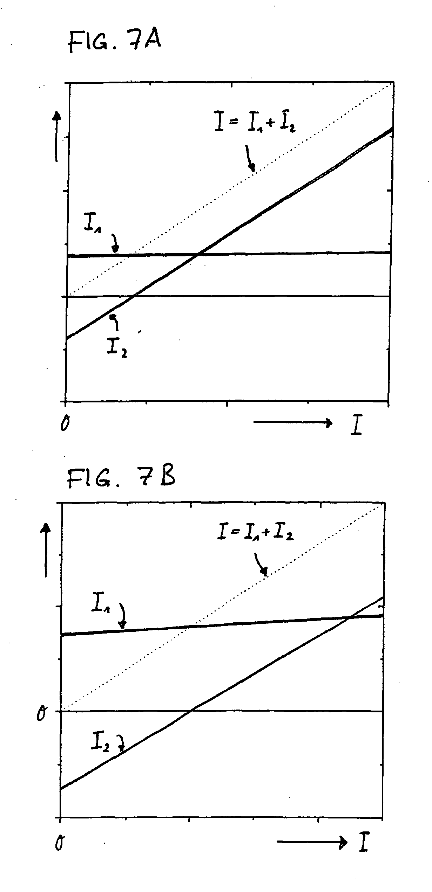

Welchen Einfluss die Änderung des Ladungszustandes auf die Systemeigenschaften hat, soll durch die Figuren 7A und 7B auf der Grundlage von modellhaften Annahmen semi-quantitativ veranschaulicht werden. In den Diagrammen ist die Abhängigkeit der Teilströme $I_1$, $I_2$ vom Gesamtstrom $I = I_1 + I_2$ bei zwei verschiedenen Ladezuständen der Batterie aufgetragen.

Eine Näherung bei diesem Modell besteht darin, den exponentiellen Anstieg der Spannung der Brennstoffzelle bei sehr niedrigen Strömen zu vernachlässigen (vgl. Fig. 1) und den linearen Bereich bis auf $I \rightarrow 0$ zu extrapolieren.

In Fig. 7A weist die Batterie einen höheren Ladezustand als in Fig. 7B auf, wobei die Quellenspannungsdifferenz $U_1 - U_2$ für den niedrigeren Ladezustand der Batterie doppelt so hoch wie für den höheren Ladezustand angenommen wird. Darüber hinaus wurde für den höheren Ladezustand das Innenwiderstand-Verhältnis $R_2/R_1 = 1/100$ und für den niedrigeren Ladezustand das Innenwiderstand-Verhältnis $R_2/R_1 = 1/10$ gewählt. Es versteht sich von selbst, dass diese Zahlenwerte willkürlich gewählt sind und lediglich zur Erläuterung des dieser bevorzugten Ausführungsform zugrundeliegenden Sachverhalts dienen.

Es sei darauf hingewiesen, dass hierbei die reduzierte Quellenspannung $U_1$ der Brennstoffzelle höher als die ladezustandabhängigen Quellenspannungen $U_2$ der Batterie angenommen wurde. Die gemachten Aussagen sind aber auch dann qualitativ richtig, wenn diese Quellenspannungen $U_2$ zwar größer als die (reduzierte) Quellenspannung $U_1$, aber kleiner oder gleich der eigentlichen Quellenspannung $U^\circ_1$ sind. Das in Fig. 1 skizzierte Abweichen der Brennstoffzelle vom linearen Verhalten bei $I \rightarrow 0$ erlaubt eine größere Toleranz hinsichtlich der Quellenspannungen der Elemente der Hybridquelle und ist dadurch für die Erfindung sogar von Vorteil.

Insbesondere können mit einer eventuellen Überladung der Batterie verbundene Probleme auf einfache Weise dadurch vermieden werden, dass die Batterie im vollgeladenen Zustand eine Quellenspannung $U_2^{max}$ besitzt, die etwa so groß wie die eigentlichen Quellenspannung $U^\circ_1$ der Brennstoffzelle ist. Für $U_2^{max} = U^\circ_1$ wird dabei die volle Beladung der Batterie nur noch asymptotisch erreicht, da bei der Annäherung von $U_2$ an $U^\circ_1$ der Ladestrom gegen Null geht. Für $U_2^{max} > U^\circ_1$ kann die volle Beladung der Batterie mit der in Fig. 4 gezeigten Anordnung überhaupt nicht mehr erreicht werden.

Bei verschwindendem Laststrom (I=0 ergibt sich mit obigen Annahmen ein Ladestrom $I_1 = |I_2| = (U_1 - U_2)/(R_1 + R_2)$.

Bei endlichem. Laststrom (l>0) ist das Verhältnis der Innenwiderstände entscheidend für die Steigungen der $I_1(l)$, $I_2(l)$ - Geraden:

Bei einem 1:1 Verhältnis hätten die beiden Geraden dieselbe Steigung (0.5). Je größer das Verhältnis ist, um so mehr nähert sich die Gerade der Energiequelle mit dem kleineren Innenwiderstand der Steigung 1 an, d.h. diese Energiequelle trägt bei höheren Lastströmen dessen Hauptanteil. Dagegen wird die Gerade für die andere Energiequelle mit zunehmenden Innenwiderstand immer flacher, so dass der durch diese Quelle gelieferte (oder in diese eingespeiste) Strom nahezu konstant bleibt (Steigung 0).

Dies soll nun anhand der Figuren 7 erläutert werden. Zunächst zu Fig. 7A: Die höhere Quellenspannung der Brennstoffzelle ist dafür verantwortlich, dass die Brennstoffzelle bei niedrigen Lastströmen sowohl für den Laststrom aufkommt, als auch die Batterie belädt, d.h. $I_2 < 0$:

$$I_1 = I + |I_2|.$$

Bei hohen Lastströmen dominiert aber wegen ihres kleineren Innenwiderstandes schon bald der Beitrag der Batterie: $I_2 \cong I$. Hohe Lastströme führen zu einer schnelleren Entladung der Batterie. Sie sollten daher nur kurzzeitig auftreten und von ausreichend langen Zeitabschnitten gefolgt sein, in denen ein Wiederaufladen der Batterie erfolgen kann.

Wird die Batterie längere Zeit entladen, d.h. $I_2 > 0$, so sinkt die Quellenspannung der Batterie allmählich ab, was zu der in Figur 7B gezeigten Situation führen kann: im Vergleich zu Figur 7A ist hier der Laststrombereich mit $I_2 < 0$ vergrößert. Gleichzeitig wird der Ladestrom $|I_2|$ beim selben Laststrom im Vergleich zu Fig. 7A erhöht.

Die oben beschriebene Hybridanordnung ist in vielen Bereichen mit hoher praktischer Relevanz vorteilhaft einsetzbar:

So zum Beispiel dann, wenn sich der Strombedarf von angeschlossenen Verbrauchern zeitlich in wenigstens grob vorherbestimmbare Bereiche mit geringer (u.U. auch verschwindender) bzw. hoher Last aufteilen lässt. Die Brennstoffzelle kann dann so dimensioniert werden, dass sie den geringen Strombedarf alleine decken und/oder die Batterie beladen kann. Das hohe Lastaufkommen wird dagegen hauptsächlich durch Batteriestrom gedeckt. Sie lässt sich insbesondere dann vorteilhaft einsetzen, wenn sich längere Perioden mit niedrigen (oder verschwindenden) Lastströmen mit kürzeren Zeitabschnitten mit vergleichsweise hohen Lastströmen abwechseln.

Sie lässt sich auch dann vorteilhaft einsetzen, wenn der Laststrom um einen zeitlichen Mittelwert schwankt. Ist dieser gemittelte Strombedarf vorbestimmt, so kann das Hybridsystem optimal für die entsprechende Anwendung ausgebildet werden, ohne dass ein Überladen oder zu starkes Entladen der Batterie auftritt.

Wie aus Figur 1 ersichtlich ist, kann eine starken Erhöhung des Laststrombedarfs, unter Umständen um ein Vielfaches, bei alleiniger Verwendung einer Brennstoffzelle zu einem völligen Zusammenbruch ihrer Klemmenspannung führen. Bei dem in Fig. 8A skizzierten zeitlichen Verlauf des Laststrombedarfs I(t) kann daher der Fall eintreten, dass die Klemmenspannung $U_K$ der Brennstoffzelle bei Lastspitzen vollständig zusammenbricht. Dies ist im entsprechenden $U_k(t)$-Verlauf in Fig. 8B durch die punktierte Linie angedeutet.

Beim Auftreten von extremen Lastspitzen kann ein solcher Zusammenbruch der Klemmenspannung gegebenenfalls aber auch bei der in Fig. 4 gezeigten Hybridenergiequelle mit einer Brennstoffzelle 1 und einer Batterie 21 auftreten.

Zur Bewältigung derartiger Lastspitzen und insbesondere bei Einsatzgebieten, bei denen ein über große Zeitabschnitte im Wesentlichen konstanter Laststrom durch kurzzeitige Lastspitzen unterbrochen wird, wie das obere Diagramm von Fig. 8 beispielhaft zeigt, sind die in den Figuren 5 und 6 skizzierten Ausführungsformen der erfindungsgemäßen Hybridenergiequelle bevorzugt, bei denen die Batterie 21 durch einen Kondensator 22 ersetzt bzw. ergänzt wird.

Unter Verwendung eines geeigneten Kondensators 22 können die Auswirkungen der Lastspitzen auf die Klemmenspannung deutlich reduziert werden, wie im unteren Diagramm von Fig. 8 mit durch die durchgezogene Linie veranschaulicht werden soll: Bei den Lastspitzen trägt der im Normallastbereich durch die Brennstoffzelle (Fig. 5) und/oder die Batterie (Fig. 6) aufgeladene Kondensator 22 wesentlich zum Stromfluss bei und verhindert dadurch eine stärkere Abnahme der Klemmenspannung der Hybridenergiequelle. Nach Ende der jeweiligen Lastspitze wird der Kondensator durch die Brennstoffzelle 1 wieder beladen.

Neben herkömmlichen Kondensatoren können besonders sogenannte Supercaps ("Super-Kondensatoren") vorteilhaft verwendet werden, die wegen ihrer hohen Kapazitäten anstelle von punktuellen Lastspitzen auch längere Hochlastperioden ohne substantiellen Spannungsabfall der Hybridenergiequelle auffangen können.

Wenn die Quellenspannung der Brennstoffzelle größer als die Quellenspannung der Batterie bei vollgeladenem Zustand ist, so fließt bei niedrigen oder verschwindenden Lastströmen auch dann noch ein Ladestrom in die Batterie, wenn diese schon voll aufgeladen ist. Dieser Strom kann zu einer Überladung der Batterie und dadurch zu einer stark herabgesetzten Lebenserwartung der Batterie führen. Um dies zu vermeiden, sollte er also begrenzt werden.

Der exponentielle Abfall der Brennstoffzellenspannung mit zunehmendem Strom, der in diesem Fall der in die Batterie eingespeiste Ladestrom ist, kann vorteilhaft zu einer Begrenzung des zur Spannungsdifferenz proportionalen Ladestroms genutzt werden, wenn das System so ausgebildet wird, dass

$$U_1 < U_2 \leq U^o_1$$

Hierbei bezeichnet $U^o_1$ die eigentliche Quellenspannung der Brennstoffzelle, $U_1$ die durch Extrapolation des linearen Bereichs für $I \rightarrow 0$ erhaltene "Quellenspannung", und $U_2$ die Quellenspannung der Batterie im vollgeladenen Zustand.

Eine derartige Konfiguration der Hybridquelle lässt sich aber technisch nicht immer realisieren. Auf bevorzugte Art und Weise lässt sich eine Überladung der Batterie mit der in Fig. 9 gezeigten Ausführungsform vermeiden, die eine Modifikation der in Fig. 4 skizzierten Ausführungsform darstellt. Es versteht sich von selbst, dass eine ähnliche Modifikation auch bei der in Fig. 6 dargestellten Ausführungsform durchgeführt werden kann.

Bei der Ausführungsform umfasst wenigstens eine Verbindung zwischen der Brennstoffzelleneinrichtung 101 und der Batterie 121 zwei Zweige a und b. In Fig. 9 sind diese Zweige auf der Pluspolseite vorgesehen. Sie können aber genausogut auf der Seite der Minuspole vorgesehen werden.

Der eine Zweig a dient dabei allein der Aufladung der Batterie 121 durch die Brennstoffzelleneinrichtung 101. Um ein Überladen zu vermeiden, ist eine Ladebegrenzungseinrichtung 130 vorgesehen. Diese Ladebegrenzungseinrichtung 130 kann beispielsweise einen Strom- und/oder Spannungsbegrenzer aufweisen. Der andere Zweig b ist mit einer Ausgangsklemme verbunden: über diesen Zweig b fließen die Beiträge $I_1 > 0$, $I_2 > 0$ der Brennstoffzelleneinrichtung 101 und der Batterie 102 zum Laststrom I. Um die Aufladung ($I_2 < 0$) der Batterie 102 über den Zweig b zu verhindern, ist eine Diode 140 vorgesehen.

Auf ähnliche Weise kann ein Elektrolysestrom ($I_1 < 0$) in die Brennstoffzelle bei den gezeigten Ausführungsformen durch das Vorsehen einer mir der Brennstoffzelle in Reihe geschalteten Diode vermieden werden, die nur $I_1 \geq 0$ zulässt und für $I_1 < 0$ sperrt. Eine Alternative dazu ist ein Ein/Aus-Schalter, der die Brennstoffzelle aus der Hybridenergiequelle auskoppelt, sobald $I_1$ und/oder $U_1$ vorgegebene Schwellwerte unterschreiten.

Eine alternative Möglichkeit zur Steuerung des Ladestroms, ohne dabei auf einen Spannungswandler zurückgreifen zu müssen, besteht darin, den zeitlichen Verlauf des Stroms $I_2$ in Abhängigkeit vom Gesamtsrom I zu verfolgen und daraus eine stets aktualisierte elektronische Ladebilanz der Batterie zu erstellen. Wegen I = $I_1 + I_2$ müssen hierzu zwei der drei Größen I, $I_1$, $I_2$ gemessen werden, was beispielsweise durch Spannungsmessungen über zwei Shunts (Präzisionswiderstände) erfolgen kann. Zur Vermeidung der Beschädigung oder Zerstörung kann ferner in den zur Brennstoffzelle führenden Anschlussleitungen ein Unterbrecher (elektronisch betätigbarer Schalter) vorgesehen sein, der die Brennstoffzelle vom System abkoppelt, sobald $I_1$ einen bestimmten Schwellwert unterschreitet.

Die Betriebsstrategie einer solchen Hybridenergiequelle kann dann hinsichtlich des Ladezustands der Batterie, der Lebensdauern von Batterie und Brennstoffzelleneinrichtung, und des Wirkungsgrades der Hybridenergiequelle optimiert werden.

Den bisher beschriebenen Ausführungsformen ist gemeinsam, dass die anfallende Klemmenspannung der Hybridenergiequelle von verschiedenen Faktoren abhängt und bei Änderung eines oder mehrerer dieser Faktoren schwankt: Zu den wichtigsten Faktoren zählen der Laststrom, der Ladezustand der Batterie, die Betriebsbedingungen der Brennstoffzelle, die Kapazität des Kondensators.

Eine besonders bevorzugte Ausführungsform, mit der eine konstante Versorgungsspannung erreicht werden kann, ist in Fig. 10 skizziert: hierbei ist ein Spannungsregler R vorgesehen, der die Klemmenspannung $U_K$ der Hybridenergiequelle in die erwünschte Ausgangsspannung $U_A$ umwandelt.

Ein Beispiel für einen solchen Regler R stellt ein PWM-Spannungssteller dar (PWM = pulse width modulation), dessen Arbeitsweise durch die Figuren 11A und 11B veranschaulicht werden soll. Ein PWM-Spannungssteller ist ein mit hoher Frequenz (typischerweise in der Größenordnung von einigen kHz, z. B. 20 kHz) getakteter Umschalter, der die Klemmenspannung $U_K$ periodisch ein- und ausschaltet, so dass aus der veränderlichen und u.a. vom Ladezustand der Batterie abhängigen Klemmenspannung $U_K$ eine Rechteckspannung $U_A(t)$ mit Amplitude $U_K$ erzeugt wird.

Die (zeitunabhänige) Ausgangsspannung $U_A$ ergibt sich aus dem zeitlichen Mittelwert dieser Rechteckspannung $U_A(t)$ und wird durch die Amplitude $U_K$, Pulsbreite und Taktung (Periodendauer) des PWM-Spannungssteller bestimmt. Die zeitliche Mittelung (Glättung) erfolgt durch Kondensatoren.

Zur Steuerung des PWM-Spannungsstellers werden die Klemmenspannung und/oder der Ladezustand permanent oder in kurzen Anständen gemessen (z.B. über Shunts), und bei Änderungen die entsprechenden Einstellgrößen des PWM-Spannungsstellers, wie Pulsbreite und/oder Taktung, angepasst. Diese Anpassung des PWM-Spannungsstellers an geänderte Klemmenspannungen kann wegen der hohen elektronischen Schallgeschwindigkeiten quasi in Echtzeit erfolgen, so dass eine für die meisten Einsatzgebiete ausreichend konstante Ausgangsspannung $U_A$ bereitgestellt werden kann.

Bei dem in Fig. 11A skizzierten Beispiel beträgt das Verhältnis zwischen Pulsbreite und Periodendauer 0,7, so dass der zeitlich gemittelte Wert $< U_A(t) > \equiv U_A = 0,7\ U_K$ beträgt. Die Ausgangsspannung der Hybridenergiequelle wird also auf 70% der Klemmenspannung reduziert.

Bei dem in Fig. 11 B skizzierten Beispiel beträgt das Verhältnis zwischen Pulsbreite und Periodendauer 0,2, so dass hierbei die Ausgangsspannung der Hybridenergiequelle wird auf 20% der Klemmenspannung reduziert wird.

Alternativen zur PWM-Einrichtung sind Linearregler, Spannungswandler oder Zenerdioden. Der Vorteil der PWM-Einrichtung gegenüber diesen Bauteilen ist ein verbesserter Wirkungsgrad, da sich Verluste im Wesentlichen allein auf die Umschaltvorgänge beschränken, während bei den oben genannten Bauteilen insbesondere bei starker Heransenkung der Ausgangsspannung gegenüber der Klemmenspannung beträchtliche ohmsche Verluste auftreten.

Verschiedene Details der vorliegenden Erfindung wurden in der Beschreibung unter Bezugnahme auf spezielle bevorzugte Ausführungsformen erläutert. Es ist aber nicht beabsichtigt, den Schutzumfang durch die in den Figuren skizzierten Ausführungsformen einzuschränken. Dass Kombinationen dieser bevorzugten Ausführungsformen möglich sind, versteht sich von selbst und bedarf keiner gesonderten Ausführung. Der Schutzumfang wird alleine durch die nachfolgenden Patentansprüche definiert.

**Patentansprüche**

1. Hybridenergiequelle (H), umfassend eine Brennstoffzelleneinrichtung (1) und eine Energiespeichereinrichtung (2), die direkt miteinander parallel verschaltet sind.

2. Hybridenergiequelle (H) nach Anspruch 1, bei welcher die Energiespeichereinrichtung (2) einen Kondensator (22) umfasst.

3. Hybridenergiequelle (H) nach einem der vorangegangenen Ansprüche, bei welcher die Energiespeichereinrichtung (2) eine Batterie (21) umfasst, die mit der Brennstoffzelleneinrichtung (1) gleichpolig verbunden ist.

4. Hybridenergiequelle (H) nach Anspruch 3, bei welcher wenigstens eine der gleichpoligen Verbindungen zwischen der Brennstoffzelleneinrichtung (101) und der Batterie (121) zwei Zweige aufweist, wobei der erste Zweig für die Aufladung der Batterie (121) durch die Brennstoffzelleneinrichtung (101) vorgesehen ist und eine Ladebegrenzungseinrichtung zur Begrenzung der Aufladung aufweist, und der zweite Zweig mit einer Ausgangsklemme verbunden ist und eine Einrichtung aufweist, um die Aufladung der Batterie (121) über den zweiten Zweig zu verhindem.

5. Hybridenergiequelle (H) nach einem der vorangegangenen Ansprüche, mit einer Einrichtung, um einen Elektrolysestrom durch die Brennstoffzelleneinrichtung zu verhindem.

6. Hybridenergiequelle (H) nach einem der Ansprüche 3 bis 5, bei welcher die Quellenspannung der Batterie (21, 121) im vollgeladenen Zustand um weniger als 10% von der Quellenspannung der Brennstoffzelleneinrichtung (1, 101) abweicht.

7. Hybridenergiequelle (H) nach einem der vorangegangenen Ansprüche, mit einem Spannungsregler (R), der die Klemmenspannung ($U_K$) der Hybridenergiequelle in eine erwünschte Ausgangsspannung ($U_A$) umwancelt.

8. Hybridenergiequelle (H) nach Anspruch 7, bei welcher der Spannungsregler (R) einen PWM-Spannungssteller umfasst.

**Geänderte Patentansprüche gemäss Regel 86(2) EPÜ.**

1. Hybridenergiequelle (H), umfassend eine Brennstoffzelleneinrichtung (1) und eine Energiespeichereinrichtung (2), die direkt miteinander parallel verschaltet sind, wobei die Energiespeichereinrichtung (2) eine Batterie (21) umfasst, die mit der Brennstoffzelleneinrichtung (1) gleichpolig verbunden ist.

2. Hybridenergiequelle (H) nach Anspruch 1, bei welcher die Energiespeichereinrichtung (2) einen Kondensator (22) umfasst.

3. Hybridenergiequelle (H) nach einem der vorangegangenen Ansprüche, bei welcher wenigstens eine der gleichpoligen Verbindungen zwischen der Brennstoffzelleneinrichtung (101) und der Batterie (121) zwei Zweige aufweist, wobei der erste Zweig für die Aufladung der Batterie (121) durch die Brennstoffzelleneinrichtung (101) vorgesehen ist und eine Ladebegrenzungseinrichtung zur Begrenzung der Aufladung aufweist, und der zweite Zweig mit einer Ausgangsklemme verbunden ist und eine Einrichtung aufweist, um die Aufladung der Batterie (121) über den zweiten Zweig zu verhindern.

4. Hybridenergiequelle (H) nach einem der vorangegangenen Ansprüche, mit einer Einrichtung, um einen Elektrolysestrom durch die Brennstoffzelleneinrichtung zu verhindern.

5. Hybridenergiequelle (H) nach einem der vorangegangenen Ansprüche, bei welcher die Quellenspannung der Batterie (21, 121) im vollgeladenen Zustand um weniger als 10% von der Quellenspannung der Brennstoffzelleneinrichtung (1, 101) abweicht.

6. Hybridenergiequelle (H) nach einem der vorangegangenen Ansprüche, mit einem Spannungsregler (R), der die Klemmenspannung (UK) der Hybridenergiequelle in eine erwünschte Ausgangsspannung (UA) umwandelt.

7. Hybridenergiequelle (H) nach Anspruch 6, bei welcher der Spannungsregler (R) einen PWM-Spannungssteller umfasst.

# FIG. 1

# FIG. 2

### FIG. 2A

### FIG. 2B

FIG. 3

FIG. 4

FIG. 5

FIG. 6

FIG. 7A

FIG. 7B

**Europäisches Patentamt**

## EUROPÄISCHER RECHERCHENBERICHT

Nummer der Anmeldung

EP 02 01 3266

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 916 699 A (MORE GEORGINA ET AL)<br>29. Juni 1999 (1999-06-29)<br>* Ansprüche 1,6-11 *<br>--- | 1-3 | H01M8/04<br>H01M16/00<br>B60L11/18<br>B60K1/04 |
| X | DE 197 24 712 A (SIEMENS AG)<br>17. Dezember 1998 (1998-12-17)<br>* Spalte 3, Zeile 22 - Zeile 30 *<br>--- | 1,2 | |
| X | EP 0 950 559 A (SIEMENS AG)<br>20. Oktober 1999 (1999-10-20)<br>* Anspruch 1 *<br>----- | 1,2 | |

**RECHERCHIERTE SACHGEBIETE (Int.Cl.7)**

H01M
B60L
B60K

Der vorliegende Recherchenbericht wurde für alle Patentansprüche erstellt

| Recherchenort | Abschlußdatum der Recherche | Prüfer |
|---|---|---|
| DEN HAAG | 8. November 2002 | Battistig, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 02 01 3266

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-11-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 5916699 | A | 29-06-1999 | KEINE | | |
| DE 19724712 | A | 17-12-1998 | DE | 19724712 A1 | 17-12-1998 |
| EP 0950559 | A | 20-10-1999 | DE | 19816918 A1 | 21-10-1999 |
| | | | EP | 0950559 A2 | 20-10-1999 |

EPO FORM P0461

Für nähere Einzelheiten zu diesem Anhang : siehe Amtsblatt des Europäischen Patentamts, Nr.12/82